# EUROPÄISCHE PATENTSCHRIFT

(11) **EP 0 394 639 B1**
(45) Veröffentlichungstag und Bekanntmachung des Hinweises auf die Patenterteilung: **02.02.1994**
(21) Anmeldenummer: 90103617.8
(22) Anmeldetag: 24.02.1990
(51) Int. Cl.: D03D 47/27, D03D 47/12

(54) **Greiferstange aus faserverstärkten Kunststoffbändern**
Gripper rod made from fibre-reinforced synthetic bands
Barre à pince en rubans de matière synthétique en fibres renforcées

(30) Priorität: 25.04.1989 DE 3913602
(43) Veröffentlichungstag der Anmeldung: 31.10.1990
(73) Patentinhaber: LINDAUER DORNIER GESELLSCHAFT M.B.H, D-88131 Lindau (DE)
(72) Erfinder: Gsell, Rainer, Dipl.-Ing. (FH), D-8995 Weissensberg (DE); White, Phil, Tempe Arizona 85284 (US)
(74) Vertreter: Riebling, Peter, Dr.-Ing.

(56) Entgegenhaltungen:
- DE-A- 1 535 491
- DE-C- 3 527 202
- US-A- 4 065 339
- US-A- 4 237 175
- US-A- 4 404 156

## Beschreibung

Die Erfindung betrifft eine Greiferstange aus faserverstärkten Kunststoffbändern als Zahnstange für schützenlose Webmaschinen, wobei eine Anzahl der faserverstärkten Kunststoffbänder nach Art von Höhenschichtlinien aufeinander gestapelt angeordnet sind und entsprechend dem zu bildenden Zahnprofil in Verbindung mit einem Preßvorgang und einer Wärmebehandlung verformt werden.

Eine derartige Vorrichtung zur Herstellung einer Greiferstange für schützenlose Webmaschinen ist bereits in der DE 35 27 202 C1 als bekannt nachgewiesen. Die dortige Greiferstange ist ebenfalls nach Art von Höhenschichtlinien aus aufeinander gestapelten faserverstärkten Kunststoffbändern hergestellt, weist aber zusätzlich Seitenstege auf, so daß sich nachteilig ein relativ hohes Gewicht ergibt. Hierdurch könnte sich, aufgrund der herrschenden Massenbeschleunigung, ein höherer Verschleiß einstellen.

Im weiteren weist die bekannte Greiferstange, entsprechend dem zu bildenden Zahnprofil, Ausstanzungen auf, die in den stufenweisen Aufbau der Greiferstange eingebracht sind, wobei aber nachteilig zumindest einzelne Fasern aus der Zahnoberfläche austreten können, wodurch insbesondere bei der Herstellung dort Treppenstufen an den Zahnflanken entsehen, was zu einer Harzanreicherung führen könnte, was wiederum zu einem erhöhten Verschleiß im Bereich der Zahnflanken führte.

Die bekannte Greiferstange ist im weiteren in der Herstellung relativ aufwendig und teuer.

Der vorliegenden Erfindung liegt deshalb die Aufgabe zugrunde, eine Greiferstange der eingangs genannten Art so weiterzubilden, daß bei geringeren Herstellungskosten und bei geringerem Gewicht eine bessere Verschleißfestigkeit erreicht wird.

Zur Lösung der Aufgabe sind die Merkmale des kennzeichnenden Teils des Patentanspruchs 1 vorgesehen.

Das Hauptmerkmal der Erfindung liegt darin, daß zwar vor dem Herstellungsprozeß die einzelnen faserverstärkten Kunststoffbänder jeweils zueinander gekreuzte Winkelgrade aufweisen, daß aber im Verlaufe des Preßvorganges bzw. der Wärmebehandlung durch die Einwirkung der Werkzeugform eine Längenänderung der vorher gradlinigen faserverstärkten Kunststoffbänder erwirkt wird, wodurch wegen der besonderen Anordnung des Faserverlaufs der faserverstärkten Kunststoffbänder nun nicht etwa die einzelne Faser verlängert wird, sondern vielmehr lediglich die Winkelorientierung des Faserverlaufs geändert, insbesondere verkleinert wird, und zwar derart, daß im Verlaufe des Herstellungsprozeßes der vorher gekreuzte Faserverlauf nun in erwünschter Weise annähernd parallel ausgerichtet wird. Die Fasern werden hierbei selbst nicht gestreckt, sondern die mit dem Preßvorgang einhergehende Längenänderung erwirkt lediglich eine Winkeländerung des Faserverlaufes, so daß in einfacher Art im weiteren ein in Bezug auf mechanische Eigenschaften vorteilhafter in Längsrichtung paralleler Faserverlauf erreicht wird.

Aufgrund der technischen Maßnahmen der Erfindung wird in überraschender Weise ein nun gestreckter nahezu paralleler Faserverlauf der einzelnen faserverstärkten Kunststoffbänder zueinander erreicht, wodurch sich überlegene Festigkeitseigenschaften erzielen lassen. Die Fasern verlaufen nach der Herstellung trotz der vorher gekreuzten Anordnung dann im wesentlichen parallel zur Oberfläche und auch parallel zu den Seitenkanten, wodurch zusätzlich vorteilhaft nur ein außerordentlich geringer Schwund in der Gesamtlänge des Zahnprofils eintritt.

In vorteilhafter Ausgestaltung ist die Winkelorientierung der einzelnen faserverstärkten Kunststoffbänder im Laminat symmetrisch ausgebildet und weist im Kreuzungsbereich jeweils Winkelgrade von 15° bis etwa 25° auf.

In weiterer vorteilhafter Ausgestaltung ist in dem Laminat in der Mitte eine Symmetrielinie vorgesehen, von der ausgehend nach Art eines spiegelsymmetrischen Aufbaus stapelweise faserverstärkte Kunststoffbänder angeordnet sind.

Eine bevorzugte Ausführungsform sieht vor, daß bei der Verbindung der faserverstärkten Kunststoffbänder untereinander nur ein einziges Gelege verwendet und hierbei im Zahnprofil ohne Seitenteile geschaffen wird, und daß im weiteren das Zahnprofil in einen U-förmig profilierten Träger eingeklebt, eingeschweißt oder eingepreßt wird.

In einer Ausgestaltung können als faserverstärkte Kunststoffbänder ein Gewebematerial mit sich kreuzenden Fasern, bestehend aus Kette und Schuß, oder ein Gestricke mit einem dreidimensionalen Faseraufbau, verwendet werden.

Die weitere vorteilhafte Ausgestaltung der faserverstärkten Kunststoffbänder bei der Verbindung untereinander ergibt sich aus den weiteren Unteransprüchen.

Im folgenden wird die Erfindung anhand einer lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Es zeigen:
- Figur 1:: ein faserverstärktes Kunststoffband;
- Figur 2:: die gekreuzte Winkelanordnung des Faserverlaufs von aufeinander zu stapelnden faserverstärkten Kunststoffbändern;
- Figur 3:: die Bildung des Laminats mittels stapelförmig aufeinander angeordneter faserverstärkter Kunststoffbänder;
- Figur 4:: ein Laminat im Schnitt mit Darstellung einer bevorzugten Winkelorientierung der aufeinander gestapelten Kunststoffbänder;
- Figur 5:: den Zuschnitt einer fertiggestellten Platte;
- Figur 6:: das Werkzeug zum Verformen des Laminats;
- Figur 7:: eine bevorzugte Formgebung des Laminats;
- Figur 8:: eine Darstellung der sich ändernden Winkelorientierung des Faserverlaufs beim Herstellungsprozeß;
- Figur 9:: die mechanischen Verhältnisse im Faserverlauf beim Einwirken von zwei benachbarten Profilformen des Werkzeuges zur Herstellung des Zahnprofils;
- Figur 10:: eine Profilform der Greiferstange beim Einwirken des Werkzeuges nach Figur 6;
- Figur 11:: die Fertigstellung des Zahnprofils zu einer Greiferstange durch Einbringen des Profils in einen U-förmig profilierten Träger;
- Figur 12:: ein Längsschnitt durch die fertiggestellte Zahnstange gemäß der Linie XII-XII in Figur 11;
- Figur 13:: eine weitere Ausführungsform eines faserverstärkten Kunstoffbandes aus gerichteten Kurzfasern zur Herstellung einer Greiferstange.

In Bezug auf die Definition eines faserverstärkten Kunststoffbandes wird zunächst festgestellt, daß es sich hierbei um ein flächenförmiges, mit Kunststoff vorimprägniertes Verstärkungsmaterial handelt, das in die Gruppe der Halbzeuge einzustufen ist.

Diese faserverstärkten Kunststoffbänder werden nun unter bestimmten Winkelorientierungen, d.h. im Winkel zueinander aufeinander stapelförmig angeordnet.

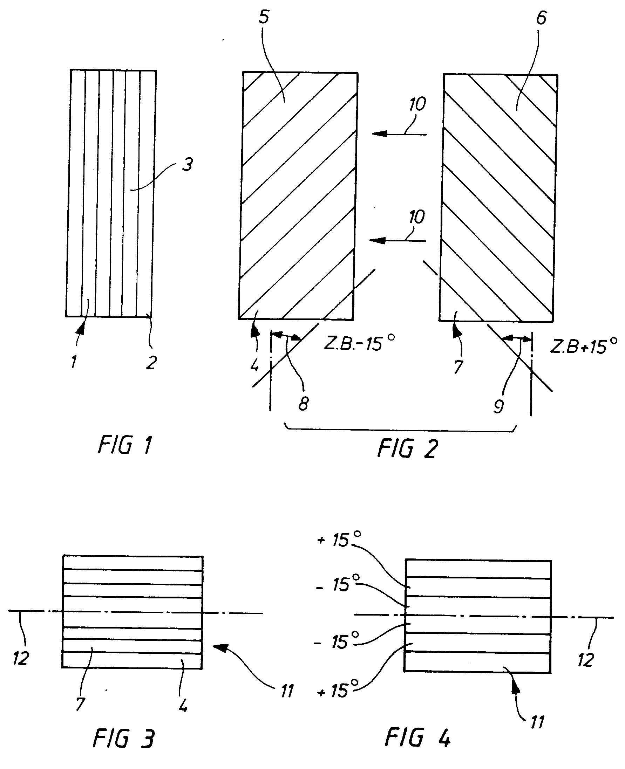

In Figur 1 ist ein derartiges faserverstärktes Kunststoffband 1 dargestellt, welches aus einem Kunststoffband 2 besteht, das Kohlestoffasern enthält, die einen bestimmten Faserverlauf 3 aufweisen. Dieser Faserverlauf ist gemäß Figur 1 parallel zu den Seitenkanten des Kunststoffbandes 2 ausgebildet.

Bei der Herstellung der erfindungsgemäßen Greiferstange wird jedoch nun ein anderer Faserverlauf verwendet.

Die Figur 2 zeigt hierbei zwei faserverstärkte Kunststoffbänder 4,7 mit dem nach der Erfindung vorgesehenen Faserverlauf 5,6 bevorzugt in einem Winkel 9 von z. B. + 15°. Zur Schichtung aufeinander werden die faserverstärkten Kunststoffbänder 4,7 in Pfeilrichtung 10 aufeinander gestapelt.

Der vorteilhafte Faserverlauf wird dadurch erzielt, daß man ein faserverstärktes Kunststoffband 1 mit zunächst sich in Längsrichtung erstreckenden Faserverlauf nach Figur 1 schräg in eine Schlagschere einlegt, so daß die Seitenkanten entsprechend einem im Winkel angeordneten Faserverlauf 5,6 nach Figur 2 erzielt wird.

Als bevorzugter Faserverlauf 5,6 wird hierbei ein Winkel 8 bzw. 9 im Bereich von 0 bis 90° bevorzugt.

Besonders günstige Ergebnisse hinsichtlich der Festigkeit und der Verschleißfestigkeit ergeben sich aber bei einem Winkel von 15° bis 25°.

Bei der stapelweisen Anordnung der faserverstärkten Kunststoffbänder nach Figur 2 werden zur Erreichung einer Wanddicke von 1,1 mm bei einer Zahnstange etwa zehn bis fünfzehn derartiger faserverstärkter Kunststoffbänder 4,7 übereinander stapelförmig angeordnet.

Wesentlich hierbei ist es, daß die Winkelorientierung der einzelnen faserverstärkten Kunststoffbänder im Laminat symmetrisch ausgebildet ist.

In Figur 3 ist ein derartiges Laminat 11 dargestellt. Es besteht aus stapelweise übereinander gelegten faserverstärkten Kunststoffbänder 4,7, wobei vorteilhaft in dem Laminat eine Symmetrielinie 12 definiert wird, welche die Mittenquerlinie durch diesen Laminataufbau darstellt.

Hierbei ist es wesentlich, daß ausgehend von der Symmetrielinie die faserverstärkten Kunststoffbänder in bestimmer Anordnung des Faserverlaufs angeordnet sind.

In Figur 4 ist ein Laminat 11 dargestellt mit einer bestimmten Faserorientierung der einzelnen faserverstärkten Kunststoffbänder, wobei ausgehend von der Symmetriemittenlinie 12 zwei faserverstärkte Kunststoffbänder gleicher Faserorientierung z. B. mit den Winkel von -15° aufeinander liegen und jeweils auf diesen in weiterer Anordnung faserverstärkte Kunststoffbänder mit einer unterschiedlichen Faserorientierung von + 15° gestapelt angeordnet sind.

Hierbei ergibt sich nach Figur 4 ein spiegelsymmetrischer Aufbau des Laminats in Bezug auf die Symmetrielinie 12.

Die Symmetrielinie 12 kann natürlich auch durch eine andere Lageorientierung erreicht werden, z. B. zunächst durch ein faserverstärktes Kunststoffband mit einer Faserorientierung von + 15° und oben und unten daran anschließend faserverstärkter Kunststoffbänder mit gleicher Faserorientierung, um wiederum einen gewünschten spiegelsymmetrischen Aufbau zu erreichen.

In einer Weiterbildung ist es vorgesehen, daß ein spiegelsymmetrischer Aufbau nicht nur aus faserverstärkten Kunststoffbändern gleicher Winkelorientierung, d.h. mit positiven und negativen Winkel erzielt wird, sondern daß die Winkel ebenfalls geändert werden, wobei jedoch stets der beschriebene spiegelsymmetrische Aufbau nach Figur 4 gefordert ist.

Hierbei ist es möglich, faserverstärkte Kunststofbänder mit einem Winkel von z. B. +- 15° mit weiteren faserverstärktes von 30° oder z. B. 45° zu kombinieren.

Im weiteren wird nun das dargestellte Laminat konsolidiert, d.h. die einzelnen faserverstärkten Kunststoffbänder werden unter Wärme und Druck miteinander verbunden.

Hierbei wird als Imprägnierungsmittel ein thermoplastischer Kunststoff verwendet, der unter Druck und Temperatur schmilzt und wieder erstarrt. Eine derartige Konsolidierung oder Verfestigung ist nicht nur in einer Presse möglich, sondern auch im Autoklaven oder in einem Vakuumofen.

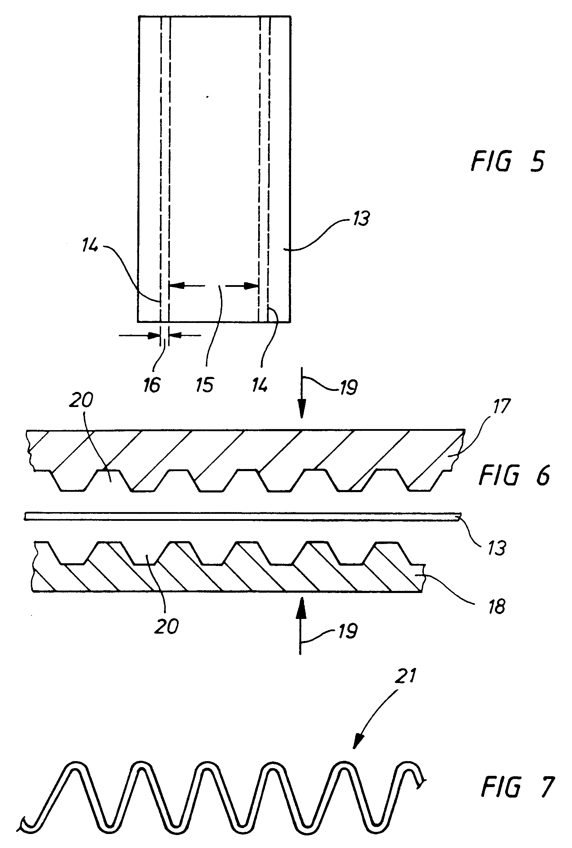

Nach dem Konsolidierungsprozeß entsteht gemäß Figur 5 eine Platte 13, die im Bereich der Schnittlinie 14 in der Breite beschnitten wird. Hierbei ist es wichtig, daß diese Schnittlinien 14 nicht etwa die genaue endgültige Breite der Zahnstange definieren, sondern daß in Bezug zur Fertigbreite 15 der Zahnstange ein Übermaß 16 belassen wird. Im Bereich dieses Übermaß 16 wird später die Zahnstange abgeschnitten und genau auf die Fertigbreite 15 gesägt oder geschliffen.

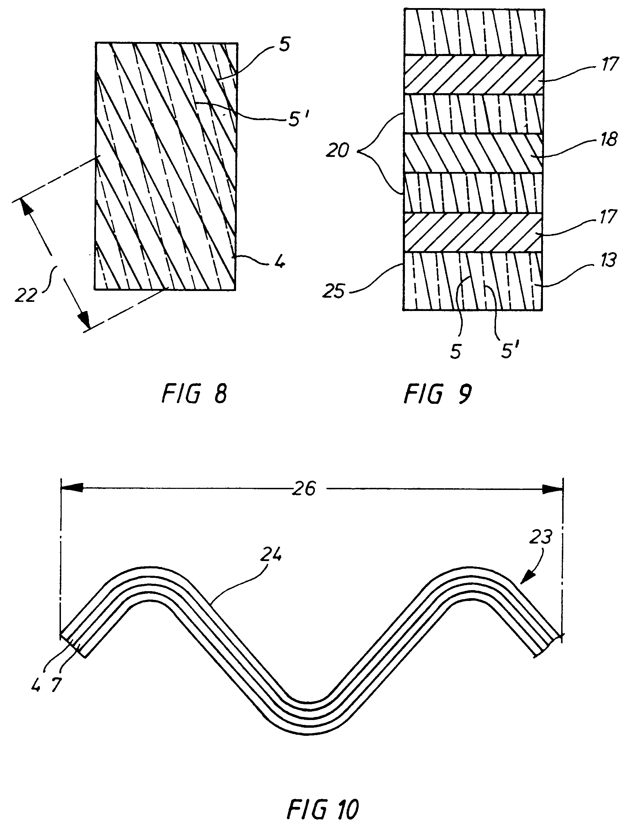

In Figur 6 ist das Werkzeug mit einem Stempel dargestellt, wo die nach Figur 5 vorgeschnittene Platte eingelegt wird.

Das Werkzeug besteht hierbei aus einem Oberwerkzeug 17 und einem Unterwerkzeug 18. Die Profilform von Ober- und Unterwerkzeug entspricht genau der Formgebung der später geforderten Zahnflanke. Es kann z. B. eine Evolventenverzahnung oder eine beliebig andere Zahnform erzeugt werden.

In der Formgebung des Ober- und Unterwerkzeuges 17,18 wird im übrigen noch ein gewisses Schwinden der zu verarbeitenden Platte 13 berücksichtigt, wobei die Zahnteilung im Werkzeug 17,18 größer ist als die später damit hergestellte Zahnteilung der Zahnstange. Im weiteren werden auch andere Geometrien wie z. B. der Radius, die Tiefe und dgl. im Schwundmaß berücksichtigt.

Die laminierte Platte 13 wird nach Figur 6 in das geöffnete Werkzeug 17,18 eingelegt und im weiteren wird die Werkzeugform beheizt. Der Beheizungsvorgang dauert solange, bis das in der Platte 13 enthaltene Kunststoffmaterial sich wieder erweicht hat. Der Kunststoff kommt hierbei über den Schmelzpunkt, d.h. die Platte erweicht sich insgesamt und wird beim Schließen der Presse in Pfeilrichtung 19 verformt. Hierbei wird die Platte 13 in die Werkzeugkavitäten 20 hineingepreßt, wodurch unter Druck, in Verbindung mit dem Aushärten des Kunststoffes eventuell bei einer Kühlung des Werkzeuges, die gewünschte Profilierung der Greiferstange entsteht.

Es ergibt sich hierbei ein zickzackförmiger Zahnverlauf 21 gemäß Figur 7.

Die Vorgänge, die sich beim Pressen nach Figur 6 im Faserverlauf abspielen, werden nun anhand der Figur 8 näher erläutert.

In Figur 8 ist lediglich schematisch zunächst ein faserverstärktes Kunststoffband 4 mit einem Faserverlauf 5 dargestellt. In gestrichelter Weise darüber eingezeichnet ist dann ein Faserverlauf 5', der sich in Annäherung nach dem Preßvorgang ergibt, wobei sich in den faserverstärkten Kunststoffband 7 nach Figur 2 ein gleichartig verlagerter Faserverlauf einstellt.

Demnach kommt es hier zu einer Verkleinerung der Winkel 8,9 nach Figur 2, insbesondere aufgrund der Streckung der Platte 13 in der Werkzeugform wegen der damit verbundenen Längenänderung beim Eingriff der Flanken der Werkzeugform. Hierbei verliert das eingelegte Laminat nach Figur 6 gleichzeitig auch an Dicke.

Wichtig ist aber, daß nach Figur 8 die Länge 22 jeder Faser auch beim Verarbeitungsprozeß nach Figur 6 gleich bleibt. Es wird demnach lediglich die Orientierung, d.h. die Winkelausrichtung der Fasern verändert, womit vermieden wird, daß die Fasern etwa unzulässig gestreckt werden und hierbei reißen. Demnach erfolgt beim Verarbeitungsvorgang eine Umformung von Fasern begrenzter Länge, z. B. gemäß der Länge 22.

Gemäß der Darstellung wird bei der Verformung im Werkzeug eine Längenänderung der eingelegten Platte gefordert, wodurch diese Längenänderung nun dadurch erreicht wird, daß eine Winkeländerung geschaffen wird, ohne die Länge 22 der Kurzfasern selbst zu ändern.

Hierdurch ist es erstmals möglich, einen Faserverlauf parallel zur Oberfläche der Platte zu erreichen und dabei gleichzeitig die Platte mit dem gewünschten Zahnprofil zu formen, wodurch bei dem erreichten Zahnprofil der Faserverlauf nahezu parallel zur Oberfläche ist.

In Figur 9 sind die mechanischen Verhältnisse im Faserverlauf beim Einwirken von zwei benachbarten Profilformen dargestellt, wobei ein Unterwerkzeug 18 mit seiner Vielform in die Kavität 20 des Oberwerkzeuges 17 eingreift.

Daraus kann ersehen werden, daß die Platte 13 nun zwischen den beiden Profilformen 17,18 festgeklemmt wird, wodurch in Verbindung mit der Kavität 20 eine Streckung des Materials erfolgt. Hierbei werden - wie dargestellt - die Fasern selbst nicht gestreckt, sondern die beim Preßvorgang erforderte Längenänderung wird durch eine Winkeländerung des Faserverlaufs erreicht, wobei der Faserverlauf 5 in Annäherung in den gestreckteren Faserverlauf 5' übergeht. Vorteilhaft ergeben sich bei der Beibehaltung der Länge der Fasern überragende mechanische Eigenschaften.

In Figur 10 ist eine Profilierung der Zahnstange dargestellt, wie sie mit der Presse nach Figur 6 erreicht wird. Hierbei entsteht ein Zahnprofil 23 mit einer Oberfläche 24, wobei ersichtlich ist, daß die faserverstärkten Kunststoffbänder 4,7 mit dem vorher beschriebenen Faserverlauf nun stapelförmig übereinander liegen und genau die Zahnprofilform ergeben, d.h. der Faserverlauf ist nun im wesentlichen parallel zur Oberfläche 24 des Zahnprofils 23.

Die Winkeländerung, welche im Preßvorgang im Faserverlauf erzielt wird, d.h. beim Übergang vom Faserverlauf 5 auf den gestreckteren Faserverlauf 5', hängt von der Breite des Zahnprofils ab, von der Dicke des Materials und selbstverständlich von dem anfangs vorgegebenen Winkel 8 bzw. 9.

Bei einem bevorzugten Winkel von z. B. 15° werden nach dem Preßvorgang im gestreckten Zustand Winkel von 0° erreicht. Bei derartigen Winkeln wird demnach der neue Faserverlauf 5' genau parallel zu den Seitenkanten 25 des Zahnprofils verlaufen. Es ist jedoch nicht zwingend - wie vorher ausgeführt - sondern es können auch andere Winkel erreicht werden.

Vorteilhaft verlaufen bei einem derartig gestreckten Faserverlauf im Winkel von 0° die Fasern nicht nur parallel zur Oberfläche 24 des Zahnprofils, sondern auch parallel zu den Seitenkanten 25.

Mit der im Verlaufe des Herstellungsprozeßes erreichten parallelen Faseranordnung insbesondere in Längsrichtung der Greiferstange, d.h. insbesondere aufgrund der Winkeländerung ohne daß eine Streckung der Faserlänge erfolgt, werden überlegende Festigkeitseigenschaften erzielt insbesondere dann, wenn die Fasern parallel zur Oberfläche 24 und im wesentlichen parallel zu den Seitenkanten 25 verlaufen. In Verbindung mit einem derartigen parallelen Verlauf tritt nur ein außerordentlich geringer Schwund in der Gesamtlänge 26 des Zahnprofils 23 nach Figur 10 auf.

Mit dieser Orientierung der Fasern bezüglich der angegebenen Flächen 24,25 werden die geforderten hohen Festigkeitseigenschaften in Verbindung mit optimalen Ergebnissen in Bezug auf den Verschleiß bei der Greiferstange erzielt.

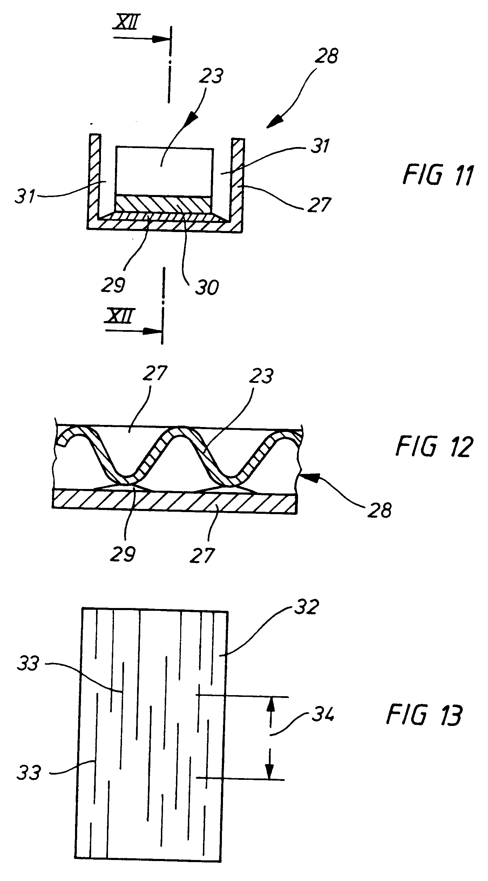

Nach der Fertigstellung des Zahnprofils 23 wird dieses Zahnprofil gemäß Figur 11 in einen U-förmig profilierten Träger 27 eingeklebt, wobei der Träger 27 ebenfalls aus einem Kunststoffmaterial besteht, welches entweder im Strangpreß-Ziehverfahren oder im Gießverfahren hergestellt wurde. Die Materialwahl des Trägers 27 kann aber in weiten Grenzen variieren, es können hier auch Metallmaterialien verwendet werden, weil der Träger 27 dem eingeklebten Zahnprofil 23 nur die mechanische Stabilität verleiht.

Gemäß den Schnitt durch eine fertige Zahnstange 28 nach Figur 11 kann anstatt einer Klebung 29 an den Boden 30 des Zahnprofils 23 auch eine Schweißung, Einpressung oder dgl. vorgenommen werden. Im weiteren kann auch der Zwischenraum 31 zwischen den Seitenwänden des Trägers 27 mit einer Klebung oder dgl. ausgefüllt werden, um das Zahnprofil 23 zusätzlich zu stabilisieren.

Die Figur 12 zeigt einen Längsschnitt durch die fertiggestellte Zahnstange 28 mit dem Träger 27 und einer Klebung 29 am Boden des Trägers.

In einer Weiterbildung - die zeichnerisch nicht näher dargestellt ist - kann statt der hier beschriebenen faserverstärkten Kunststoffbänder auch ein Gewebematerial aus Kette und Schuß verwendet werden. Das Gewebe besteht hierbei bevorzugt aus Kohlenstoffasern, Polyamidfasern, Glasfasern oder dgl.

Gemäß den Figuren 1 bis 4 wurde ein unidirektionaler Faserverlauf beschrieben, wobei gemäß der vorstehenden Darstellung bei einem Gewebe auch sich kreuzende Fasern verwendet werden können. Hierbei ist es an sich gleichgültig, in welchem Kreuzungswinkel die Fasern des Gewebes ausgebildet sind.

Statt der beschriebenen Gewebe können auch Gestricke mit einem dreidimensionalen Faseraufbau verwendet werden, die aber den gleichen Funktionszusammenhängen - wie vorstehend beschrieben - unterworfen werden.

In Figur 13 ist eine weitere Ausführungsform eines faserverstärkten Kunststoffbandes 32 dargestellt, wobei hier gerichtete Kurzfasern 33 mit einer Faserlänge 34, die bevorzugt im Bereich von etwa 30 bis 40 mm liegt, verwendet werden.

Bei der Verarbeitung des derart beschriebenen faserverstärkten Kunststoffbandes 32 kommt es nicht zu der beschriebenen Winkeländerung im Faserverlauf nach Figur 8, sondern diese Kurzfasern 33 verschieben sich vielmehr gegeneinander, d.h. also in Längsrichtung des faserverstärkten Kunststoffbandes 32, womit die erforderliche Längenänderung während des Preßvorgangs erreicht wird. Hierbei ergibt sich ebenfalls ein Zahnprofil 23, dessen Faserverlauf parallel zu den Oberflächen 24,25 ist.

Nach Figur 5 wird zunächst eine Platte 13 ausgehärtet, d.h. das Kunststoffmaterial wird verflüssigt und dann wieder ausgehärtet, was aber nicht unbedingt erforderlich ist. Es ist vielmehr auch möglich, die noch nicht konsolidierte Platte 13 sofort in eine Werkzeugform nach Figur 6 einzulegen und unter den dort beschriebenen Arbeitsvorgängen weiter zu verarbeiten. Eine Vorkonsolidierung ist demnach nicht unbedingt erforderlich.

Mit der hergestellten Zahnstange werden überlegende Festigkeitseigenschaften bei geringem Gewicht erzielt. Weil es sich hierbei um ein wellblechartig geformtes Zahnprofil handelt, entfallen die früher bekannten Vollprofile, wodurch eine Gewichtsersparnis von 30 bis 40 % gegenüber einem Vollprofilzahn erreicht wird.

## Patentansprüche

1. Verfahren zur Herstellung einer Greiferstange aus faserverstärkten Kunststoffbändern als Zahnstange für schützenlose Webmaschinen, wonach eine Anzahl der faserverstärkten Kunststoffbänder nach Art von Höhenschichtlinien aufeinandergestapelt angeordnet sind und entsprechend dem zu bildenden Zahnprofil in Verbindung mit einen Preßvorgang und einer Wärmebehandlung geformt werden, **dadurch gekennzeichnet**, daß
- die ebenflächigen faserverstärkten Kunststoffbänder (2), deren Faserverlauf (5,6) in einem Winkelbereich von vorzugsweise 15° bis 25° zur betreffenden Längsseiten-Schnittkante liegt, zunächst abwechselnd unter zueinander gekreuzten Winkelanordnungen des Faserverlaufs aufeinandergestapelt werden,
- ein Profil-Laminat unter Einwirkung des Preßvorganges und der Wärmebehandlung hergestellt wird, wobei eine Längenänderung der ebenflächigen Kunststoffbänder derart herbeigeführt wird, daß eine Winkeländerung des Faserverlaufs im Sinne einer Reduzierung erfolgt, und
- nachfolgend das Profil-Laminat mit einem U-förmigen Träger (27) verbunden und/oder an diesen gefügt wird.

2. Verfahren nach Anspruch 1, **dadurch gekennzeichnet**, daß in dem Laminat in der Mitte eine Symmetrielinie (12) vorgesehen ist, von der ausgehend nach Art eines spiegelsymmetrischen Aufbaus stapelweise faserverstärkte Kunststoffbänder angeordnet werden.

3. Verfahren nach Anspruch 2, **dadurch gekennzeichnet**, daß an der Symmetrielinie (12) zunächst zwei faserverstärkte Kunststoffbänder (1) gleicher Faserorientierung aufeinander gelegt werden und darauf faserverstärkte Kunststoffbänder (1) mit jeweils lagenweise wechselnden Faserorientierungen geschichtet werden.

4. Verfahren nach Anspruch 2, **dadurch gekennzeichnet**, daß die Symmetrielinie (12) durch ein faserverstärktes Kunststoffband (1) mit bestimmter Faserorientierung gebildet wird und symmetrisch dazu im Wechsel faserverstärkte Kunststoffbänder mit jeweils lagenweise gleichariger Faserorientierungen geschichtet werden.

5. Verfahren nach einem der Ansprüche 1 bis 4, **dadurch gekennzeichnet**, daß die einzelnen faserverstärkten Kunststoffbänder (1) mit zueinander gekreuzter Faserorientierung und unterschiedlicher Winkelanordnung zu einem Laminat mit spiegelsymmetrischem Aufbau aufeinander geschichtet werden.

6. Verfahren nach Anspruch 5, **dadurch gekennzeichnet**, daß faserverstärkte Kunststoffbänder (1) mit einem Winkel von 15° bzw. - 15° im Faserverlauf mit weiteren faserverstärkten Kunststoffbändern kombiniert werden, die jeweils abwechselnd einen Faserverlauf zwischen 30° und 45° aufweisen.

7. Verfahren nach Anspruch 1, **dadurch gekennzeichnet**, daß Prepregs bestehend aus mehreren aufeinandergeschichteten unidirektionalen faserverstärkten Kunststoffbändern (1) mit einsprechend überkreuzendem Faserverlauf anstelle der einzelnen unidirektionalen faserverstärkten Kunststoffbändern (1) verwendet werden.

8. Verfahren nach Anspruch 7, **dadurch gekennzeichnet**, daß das Zahnprofil (23) mit den Seitenwandungen des Trägers (27) mittels Klebungen (29) verbunden werden.

9. Verfahren nach Anspruch 1, **dadurch gekennzeichnet**, daß als Basismaterial des faserverstärkten Kunststoffbandes (2) ein Gewebe mit sich kreuzenden Fasern, bestehend aus Kett- und Schußfäden oder ein Gestricke mit einem dreidimensionalen Faserverlauf verwendet wird.

10. Verfahren nach Anspruch 1, **dadurch ge-ken nzeichnet**, daß die Zahnstange (28) zusätzlich auf ein ebenes, steifes Band zur Erreichung einer Torsionssteifigkeit aufgebracht wird.

## Claims

1. A method for the production of a gripper bar from fibre-reinforced plastics bands as toothed rack for shuttleless looms, according to which a number of the fibre-reinforced plastics bands are arranged stacked onto each other in the manner of contour lines and are shaped according to the tooth profile which is to be formed in connection with a pressing process and a heat treatment, characterised in that
the flat fibre-reinforced plastics bands (2), the fibre course (5, 6) of which lies in an angle range of preferably 15° to 25° to the respective longitudinal side cutting edge, are stacked onto each other with angle arrangements of the fibre course alternately crossed with respect to each other,
a laminate section is produced under the effect of the pressing process and of the heat treatment, in which an alteration in length of the flat plastics bands is brought about such that an angle alteration to the fibre course takes place in the sense of a reduction, and
thereafter the laminate section is connected with a U-shaped U-carrier (27) and/or is joined thereto.

2. A method according to claim 1, characterised in that the laminate, is provided in the centre, with a symmetry line (12), starting from which, in the manner of a structure in mirror symmetry, fibre-reinforced plastics bands are arranged in stacks.

3. A method according to claim 2, characterised in that on the symmetry line (12) firstly two fibre-reinforced plastics bands (1) of the same fibre orientation are placed on each other and thereon fibre-reinforced plastics bands (1) are layered with fibre orientations alternating in each case by layers.

4. A method according to claim 2, characterised in that the symmetry line (12) is formed by a fibre-reinforced plastics band (1) with a particular fibre orientation and symmetrically thereto, fibre-reinforced plastics bands are layered alternately with in each case the same fibre orientations in layers.

5. A method according to one of claims 1 to 4 characterised in that the individual fibre-reinforced plastics bands (1), with a fibre orientation, crossed with respect to each other and with a different angle arrangement, are layered onto each other into a laminate with a structure in mirror symmetry.

6. A method according to claim 5, characterised in that fibre-reinforced plastics bands (1) with an angle of 15° or - 15° in the fibre course are combined with further fibre-reinforced plastics bands, which in each case have alternately a fibre course between 30° and 45°.

7. A method according to claim 1, characterised in that prepregs consisting of several unidirectional fibre-reinforced plastics bands (1), layered on to each other, with a correspondingly crossing-over fibre course are used instead of the individual unidirectional fibre-reinforced plastics bands (1).

8. A method according to claim 7, characterised in that the tooth profile (23) is connected with the side walls of the carrier (27) by means of gluing (29).

9. A method according to claim 1, characterised in that as base material of the fibre-reinforced plastics band (2) a fabric is used having fibres which cross each other, with a three-dimensional fibre course.

10. A method according to claim 1, characterised in that the toothed rack (28) is additionally applied onto a flat, stiff band to achieve rigidity with respect to torsion.

## Revendications

1. Procédé pour la fabrication d'un leveur, à partir de bandes de matière synthétique renforcées par fibres, servant de crémaillère pour des métiers à tisser sans navettes, selon lequel un certain nombre des bandes de matière synthétique renforcées par fibres sont empilées les unes sur les autres à la manière de courbes de niveau et sont profilées, en fonction du profilé denté à former, en liaison avec une opération de compression et un traitement thermique, caractérisé en ce que
- les bandes de matière synthétique planes renforcées par fibres (2), dont le fibrage (5, 6) se trouve dans une zone angulaire de préférence de 15° à 25° par rapport au bord de coupe du côté longitudinal concerné, sont tout d'abord empilées alternativement les unes sur les autres suivant des dispositions angulaires du fibrage croisées les unes par rapport aux autres,
- un laminé profilé est fabriqué sous l'action de l'opération de compression et du traitement thermique, une modification de la longueur des bandes de matière synthétique planes étant entraînée par le fait qu'une modification angulaire du fibrage a lieu dans le sens d'une réduction, et
- le laminé profilé est ensuite relié à un substrat en U (27) et/ou joint à celui-ci.

2. Procédé selon la revendication 1, caractérisé en ce qu'il est prévu, au milieu du laminat, une ligne de symétrie (12) à partir de laquelle sont disposées de façon empilée des bandes de matière synthétique renforcées par fibres à la manière d'une structure symétrique.

3. Procédé selon la revendication 2, caractérisé en ce que deux bandes de matière synthétique renforcées par fibres (1) de même orientation sont tout d'abord posées l'une sur l'autre au niveau de la ligne de symétrie (12), et des bandes de matière synthétique renforcées par fibres (1) présentant des orientations alternées à chaque couche sont disposées en couches sur lesdites bandes (1).

4. Procédé selon la revendication 2, caractérisé en ce que la ligne de symétrie (12) est formée par une bande de matière synthétique renforcée par fibres (1) présentant une orientation définie, et symétriquement par rapport à celle-ci, des bandes de matière synthétique renforcées par fibres présentant des orientations du même type, à chaque couche, sont disposées par couches alternatives.

5. Procédé selon l'une des revendications 1 à 4, caractérisé en ce que les différentes bandes de matière synthétique renforcées par fibres (1) sont disposées par couches pour former un laminat à structure symétrique, avec des orientations croisées les unes par rapport aux autres et suivant des dispositions angulaires différentes.

6. Procédé selon la revendication 5, caractérisé en ce que des bandes de matière synthétique renforcées par fibres (1) présentant un fibrage d'un angle de 15° ou -15° sont combinées avec d'autres bandes de matière synthétique renforcées par fibres qui présentent alternativement un fibrage situé entre 30° et 45°.

7. Procédé selon la revendication 1, caractérisé en ce qu'on utilise, à la place des différentes bandes de matière synthétique renforcées par fibres (1) unidirectionnelles, des pré-imprégnés formés de plusieurs bandes de matière synthétique renforcées par fibres (1) unidirectionnelles et à fibrage croisé en conséquence, posées les unes sur les autres.

8. Procédé selon la revendication 7, caractérisé en ce que le profilé denté (23) est relié aux parois latérales du substrat (27) à l'aide de collages (29).

9. Procédé selon la revendication 1, caractérisé en ce qu'on utilise comme matériau de base pour la bande de matière synthétique renforcée par fibres (2), un tissu à fibres croisées formé de fils de chaîne et de fils de trame, ou un tricot à fibrage tridimensionnel.

10. Procédé selon la revendication 1, caractérisé en ce que la crémaillère (28) est appliquée en supplément sur une bande plane et rigide afin d'obtenir une rigidité à la torsion.
